# EUROPÄISCHE PATENTANMELDUNG

(11) **EP 1 153 719 A1**
(43) Veröffentlichungstag der Anmeldung: **14.11.2001**
(21) Anmeldenummer: 00110047.8
(22) Anmeldetag: 12.05.2000
(51) Int. Cl.: B27N 3/28, B32B 27/32, B32B 27/04, B32B 27/20

(54) **Folie aus Holzmehl und Polyolefin, Verfahren zum Herstellen einer solchen Folie und Verwendung derselben**

(71) Anmelder: MZE Engineering GmbH, 26160 Bad Zwischenahn (DE)
(72) Erfinder: Zaher, Maximilian, 26160 Bad Zwischenahn (DE)
(74) Vertreter: von Hellfeld, Axel, Dr. Dipl.-Phys.

(57) **Zusammenfassung**

Eine Folie (10) besteht aus 50 bis 80 % Holzmehl und einem Polyolefin. Auf die Folie sind ein Farbdekor (12) und eine Lackschicht (14) aufgetragen. Die Folie hat gute mechanische Eigenschaften, insbesondere eine starke Dämpfungswirkung und eine hohe Abriebfestigkeit. Mit ihr können Gegenstände aller Art beschichtet werden, insbesondere Gegenstände aus Holzwerkstoff.

## Beschreibung

Die Erfindung betrifft eine Folie aus Holzmehl und Polyolefin, ein Verfahren zum Herstellen einer solchen Folie und ihre Verwendung zur Beschichtung von Gegenständen.

Ziel der Erfindung ist es, eine Folie der eingangs genannten Art derart bereitzustellen, daß mit ihr kostengünstig Gegenstände aus unterschiedlichen Werkstoffen beschichtet werden können. Dabei soll die Folie gute Dämpfungseigenschaften haben, auf Gegenstände aus geringwertigem Material (z. B. Spanplatten oder dergleichen), auftragbar sein, sich besonders für die Beschichtung von 3-dimensional anspruchsvollen Körpergeometrien eignen und schließlich umwelttechnisch gegenüber dem Stand der Technik günstiger sein.

Dies wird erfindungsgemäß erreicht mit einer Folie, die 50 bis 80 Vol.-% Holzmehl und als Rest im wesentlichen Polyolefine aufweist.

Bevorzugt wird als Polyolefin ein Polypropylen oder ein Polyethylen verwendet.

Diese Folie gewinnt gegenüber dem Stand der Technik einen besonderen Vorteil dadurch, daß sie mit einem Farbdekor beschichtet werden kann. Es wurde festgestellt, daß eine solche Beschichtung möglich ist, wenn die fertige (gegebenenfalls zwischenzeitlich abgekühlte) Folie auf 130°C bis 150°C erhitzt wird. In diesem Zustand ist die Folie in der Lage, ein Farbdekor aufzunehmen. Dies bildet einen wesentlichen Vorteil gegenüber dem Stand der Technik, bei dem Mischungen mit geringeren Anteilen an Holzmehl nur geeignet waren, z. B. eine Kunstlederbeschichtung anzunehmen.

Um eine insbesondere mechanische Belastungen standhaltende Folie bereitzustellen, wird über das Farbdekor bevorzugt ein Lack aufgetragen und mit UV-Strahlung gehärtet. Dies ergibt eine hervorragende Wasserbeständigkeit und Abriebbeständigkeit. Die mechanischen Eigenschaften des farbig dekorierten und lackierten Folienproduktes sind insbesondere dadurch hervorragend, daß das Material unter dem Lack eine gewisse Elastizität hat, die auch für hervorragende mechanische Dämpfungseigenschaften sorgt.

Die erfindungsgemäße Folie mit Farbdekor und Lackschicht eignet sich besonders zum Beschichten von Gegenständen und Körpern aus Holz oder einem Holzwerkstoff, insbesondere zum Beschichten von Spanplatten. Damit können Möbelfronten in hochwertig dekorierter und lackierter Qualität hergestellt werden, ohne die bisher im Stand der Technik verwendeten Kunststoffe, wie PVC, Polyester etc. Insbesondere können kostengünstige Spanplatten verwendet werden, ohne daß in unerwünschter Weise die Plattenstrukturen auf der Vorderseite in Erscheinung treten.

Die Folien haben insgesamt bevorzugt eine Stärke im Bereich von 0,5 bis 5 mm, in Abhängigkeit von ihrer Verwendung.

Gemäß dem erfindungsgemäßen Verfahren zum Herstellen einer Folie wird in eine Schmelze aus im wesentlichen Polyolefin mit einer Temperatur von 150 bis 210°C Holzmehl eingemischt, und zwar mit einem Anteil von 50 bis 80 Vol.-%.

Die Verwendung von Holzmehl (also Sägemehl) bedeutet eine wesentliche Kostenersparnis und auch eine Vereinfachung der Herstellungsprozesse im Vergleich zu der Verwendung von Faserstoffen.

Die Folie kann dann aus der Schmelze in an sich bekannter Weise extrudiert werden.

Die so hergestellte und gegebenenfalls bereits abgekühlte Folie läßt sich dadurch besonders gut mit einem Farbdekor beschichten, daß sie auf Temperaturen im Bereich von 130°C bis 150°C erhitzt wird. Bei dieser Temperatur läßt sich ein Farbdekor festhaftend aufbringen. Bevorzugt erfolgt das Aufbringen des Farbdekors mit der sog. "Release"-Technik, die als solche bekannt ist (vgl. insbesondere EP 0 573 676 A1). Als flächige Träger mit "Release"-Eigenschaft kommen insbesondere in Betracht bestimmte Papiere und auch Kunststoffolien, die an ihrer Oberfläche so gestaltet bzw. präpariert sind, daß unter bestimmten Bedingungen aufgetragene Farbschichten oder Lackschichten in der Art eines "Abpellens" (wie ein Abziehbild) auf ein Substrat (hier die Folie) übertragbar sind. Für die hier vorliegende Erfindung kommen insbesondere als Träger mit "Release"-Eigenschaft Kunststoffolien, wie insbesondere Polyester-Folien, in Betracht, die eine geeignete Trennschicht aufweisen, um die "Release"-(Abpell)-Eigenschaft zu erreichen.

Bevorzugt wird erfindungsgemäß das Farbdekor mit der "Release"-Technik auf die Folie aufgebracht und zwar besonders bevorzugt bei der genannten Temperatur von 130°C bis 150°C.

Über das Farbdekor kann dann eine härtbare Lackschicht aufgetragen werden, z. B. mittels einer Walze. Danach wird der Lack gehärtet, bevorzugt mittels UV-Strahlung.

Die Erfindung lehrt auch ein Verfahren zum Aufbringen einer Folie der vorstehend beschriebenen Art auf einen Körper, wobei der Körper insbesondere und bevorzugt aus Holz oder einem Holzwerkstoff besteht, insbesondere eine Spanplatte. Bei diesem Verfahren wird die Folie unter Erwärmung durch eine Druckdifferenz gegen den Körper gedrückt und so fest mit diesem verbunden. Dabei ist der Körper zuvor bevorzugt mit einem Schmelzkleber beschichtet worden. Die Druckdifferenz wird bevorzugt dadurch erreicht, daß auf der Unterseite der aufzutragenden Folie ein Unterdruck (Vakuum) erzeugt wird, so daß der über der Folie liegende Luftdruck die Folie gegen den Körper drückt. Die Elastizität und Plastizität der Folie unter Erwärmung ermöglicht ein Anpassen der aufgebrachten Folie an 3-dimensionale Strukturen des Körpers.

Weiterhin lehrt die Erfindung auch ein besonderes Verfahren zum Herstellen eines Kunststoff-Formteils, das mit einer Folie der oben beschriebenen Art stabil beschichtet ist. Hierzu wird die beschriebene Folie in einer Spritzgußmaschine vor eine Form gespannt und hinterspritzt. Dabei ist die Folie auf der hinterspritzten Seite, d. h. das Farbdekor und der Lack sind auf der anderen Seite, also der Formseite.

Bevorzugt wird dabei die Folie beim Hinterspritzen unter Zugspannung gehalten, d. h. die Abmessungen von Form und Folie sind so, daß beim Spritzen die Zugspannung entsteht. Hierdurch entsteht ein fester Verbund zwischen Folie und Kunststoffkörper und Falten werden verhindert.

Mit diesem Verfahren lassen sich insbesondere 3-dimensionale, hochwertig beschichtete Teile für den Kraftfahrzeugbau, wie z. B. Armaturenbretter etc. herstellen. Die guten Dämpfungseigenschaften der Folie sind hier besonders vorteilhaft. Bei dieser Anwendung wird eine Stärke der Folie im Bereich von 0,7 bis 3mm bevorzugt.

Die oben beschriebenen Folien eignen sich auch zur Beschichtung von Fußböden aus Holz oder Holzwerkstoff, wobei die hohe Wasserbeständigkeit und Abriebfestigkeit besonders vorteilhaft ist. Dabei werden bevorzugt Stärken der Folie im Bereich von 1 bis 4 mm verwendet (wenn hier Stärken der Folie angegeben werden, bedeutet dies die Stärke der Mischung aus Polyolefin und Holzmehl als solcher; das Farbdekor und die Lackschicht haben in der Regel eine vernachlässigbare Stärke). Weiterhin bedeuten %-Angaben hier Volumen-Prozente.

Nachfolgend werden Ausführungsbeispiele der Erfindung mit Blick auf die Zeichnung näher beschrieben. Es zeigt:
- Figur 1: schematisch eine Folie aus Holzmehl und Polyolefin mit einer Farbdekorschicht und einer Lackschicht;
- Figur 2: schematisch eine Vorrichtung zum Aufbringen eines Farbdekors und einer Lackschicht auf eine Folie;
- Figur 3: schematisch eine Spritzgußmaschine, in der eine Folie hinterspritzt wird;
- Figur 4: schematisch eine Vorrichtung zum Aufbringen einer Folie auf einen zu beschichtenden und zu dekorierenden Körper.

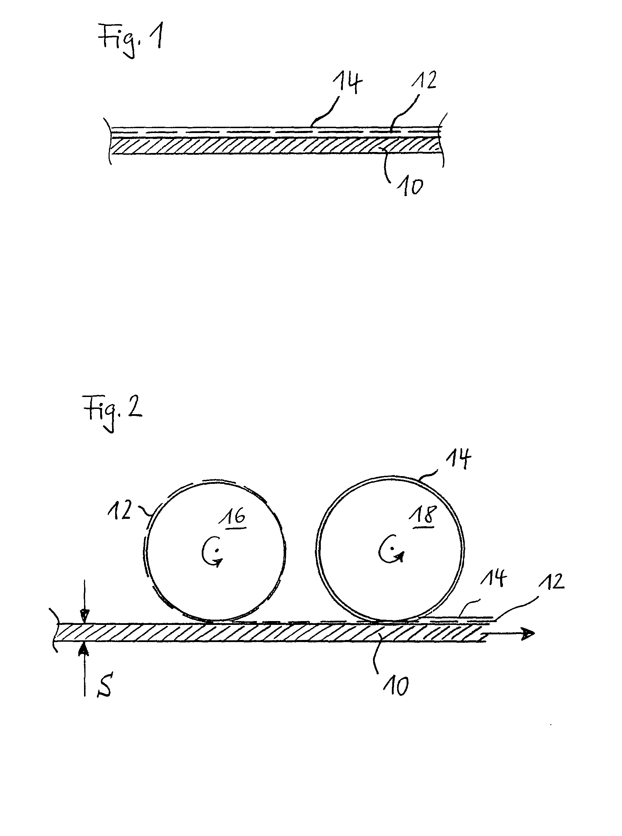

Figur 1 zeigt eine Folie 10, die zu 50 bis 80 Vol.-% aus Holzmehl besteht, während der Rest im wesentlichen von einem oder verschiedenen Polyolefinen gebildet wird. Als Polyolefin wird besonders bevorzugt Polypropylen oder Polyethylen verwendet, und zwar ohne Lösungsmittel. Die Herstellung erfolgt so, daß vom Polyolefin eine Schmelze im Temperaturbereich von 150 bis 200°C hergestellt wird, zu der Holzmehl (Sägemehl) bis zu den genannten Volumenanteilen von 50 bis 80 % im entstehenden Produkt hinzugegeben wird. Es wird eine homogene Mischung erzeugt und die gewünschte Folie mit Stärken im Bereich von bevorzugt 0,5 mm bis 5 mm kann in herkömmlicher Weise extrudiert werden.

Die so erzeugte Folie 10 läßt sich dann gut und stabil mit einem Farbdekor versehen, wenn sie eine Temperatur im Bereich von 130°C bis 150°C hat.

Figur 2 zeigt schematisch das Aufbringen eines Farbdekors 12 und einer Lackschicht 14 auf die Folie 10. Die Folie 10 hat z. B. eine Stärke S im genannten Bereich. Sie wird in Figur 2 von links nach rechts (vgl. den Pfeil) gefördert.

Auf einer Rolle 16 ist ein Träger mit "Release"-Eigenschaft aufgerollt, der auf seiner Außenseite mit einem Farbdekor 12 versehen ist. Da diese "Release"-Technik als solche bekannt ist, ist der Träger in den Figuren nicht näher dargestellt. Die Rolle 16 wird auf Temperaturen im genannten Bereich von 130 bis 150°C gehalten. Folie 10 und Drehgeschwindigkeit der Rolle 16 sind so aufeinander abgestimmt, daß das Farbdekor 12 paßgenau unter Druck auf die Folie 10 übertragen wird. Im weiteren Verlauf gelangt die Folie 10 zu der Walze 18, mit der eine Lackschicht 14 aufgetragen wird.

Die Farbdekorschicht 12 und die Lackschicht 14 werden so ausgewählt, daß sie thermisch verformbar sind.

Damit entsteht ein für sich handhabbares und handelbares Produkt in Form einer Folie 10 mit einer Beschichtung aus einem Farbdekor 12 und einer Lackschicht 14, die UV-gehärtet oder UV-härtbar ist.

Diese Folie kann vielfältig verwendet werden. Sie hat hohe Wasserbeständigkeit und gute mechanische Eigenschaften, insbesondere Abriebfestigkeit. Besonders wesentlich sind für eine Vielzahl von Anwendungen die guten Dämpfungseigenschaften der Folie. Dies gilt besonders für Anwendungen im Fußbodenbereich oder auch beim Automobilbau, wo insbesondere im Innenraum der Karosserie möglichst Teile verwendet werden sollen, die bei Aufprall dämpfend wirken, so z. B. im Bereich des Armaturenbrettes etc.

Anhand der Figur 2 wurde eine bevorzugte Technik des Aufbringens des Farbdekors und der Lackschicht auf die Folie erläutert. Es ist in Abwandlung dieses Ausführungsbeispieles auch möglich, in einem Extruder die Farbdekorschicht und gegebenenfalls die Lackschicht auf die Folie zu kaschieren.

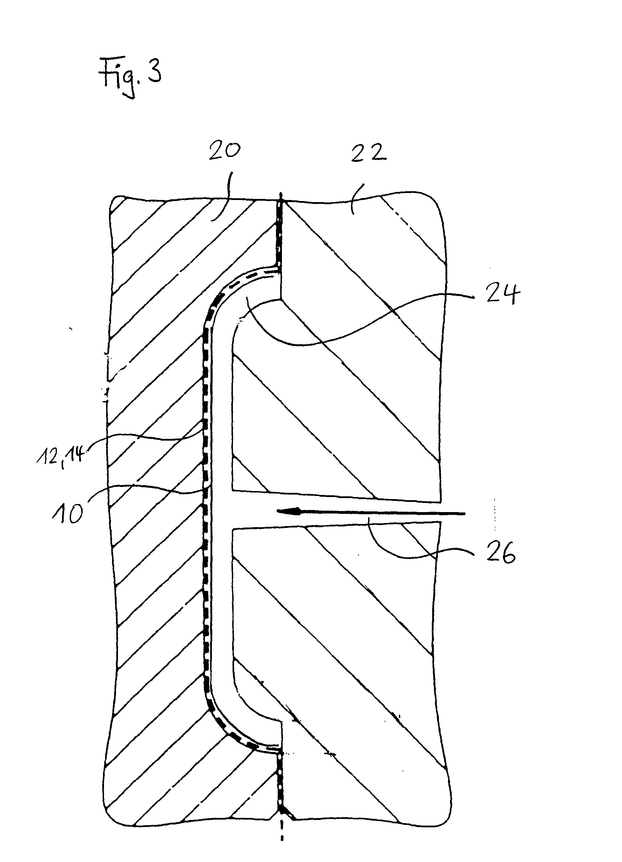

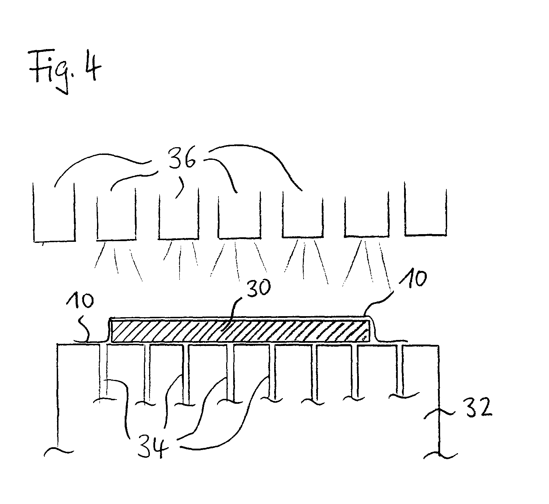

Die Figuren 3 und 4 zeigen Ausführungsbeispiele für die Verwendung der Folie.

Figur 3 zeigt eine als solche bekannte Spritzgußmaschine, die hier nicht im einzelnen erläutert zu werden braucht. Zwischen den beiden Formhälften 20, 22 bleibt ein Hohlraum 24, in den Kunststoff durch den Kanal 26 unter hohem Druck injiziert wird. Die in Figur 3 links angeordnete Formhälfte 20 ist so geformt wie das gewünschte, herzustellende Produkt. Dabei kann die Form 3-dimensional komplizierter sein als in Figur 3 schematisch dargestellt ist. Die in der oben beschriebenen Weise hergestellte Folie 10 wird, wie dargestellt, eingespannt, und zwar so, daß die Farbschicht und die Lackschicht (12, 14) in Figur 3 links von der Folie 10 liegen. Kunststoff wird durch den Kanal 26 injiziert und füllt den Hohlraum 24 unter hohem Druck aus. So entsteht ein Produkt, auf das die Folie 10 zuunterst fest aufgebracht ist. Über der Folie 10 befinden sich die Farbschicht 12 und darüber die Lackschicht 14, wie oben beschrieben.

Figur 4 zeigt die Beschichtung eines Körpers 30 mit einer erfindungsgemäßen Folie 10, wobei die Folie 10 auf ihrer vom zu beschichtenden Körper abgekehrten Seite die Farbdekorschicht und die Lackschicht aufweist, wie oben beschrieben ist. In Figur 4 sind die Farb- und Lackschichten nicht gesondert dargestellt.

Der Körper 30 kann z. B. aus Holz oder einem Holzwerkstoff bestehen, insbesondere einer Spanplatte, um eine Möbelfront herzustellen. Der Körper 30 kann eine 3-dimensional kompliziertere Gestalt haben als in Figur 4 dargestellt ist, da die erfindungsgemäße Folie besonders anpassungsfähig ist.

Der zu beschichtende Körper 30 wird auf einem Tisch 32 positioniert, in dem eine Vielzahl von Vakuum-Saugleitungen 34 ausgebildet sind. In den Leitungen 34 wird ein Unterdruck erzeugt (die hierzu erforderliche Vakuumpumpe ist nicht dargestellt). Die Folie 10 wird über den zu beschichtenden Körper 30 gelegt und unter Anwendung von Druck und erhöhter Temperatur aufgebracht. Das über die Saugleitungen 34 angelegte Vakuum erzeugt eine Druckdifferenz an der Folie 10, so daß die Folie 10 rundum an den Körper 30, soweit dieser freiliegt, angepreßt wird. Zuvor und/oder gleichzeitig wird mit z. B. Infrarot-Heizstrahlern 36 die Folie 10 erwärmt.

Zur besseren Haftung zwischen Folie 10 und Körper 30 kann letzterer zuvor mit einem Schmelzkleber beschichtet sein.

Bevorzugt werden beim mit Bezugnahme auf Figur 4 beschriebenen Verfahren Folienstärken im Bereich von 0,7 bis 1 mm verwendet. Auf diese Weise lassen sich insbesondere sehr kostengünstig Möbelfronten herstellen mit Spanplatten als Grundkörper. Das so hergestellte Produkt ist gut "recyclebar". Es ist unter Verwendung der anhand der Figuren 1 und 2 beschriebenen Folie in einem einzigen Arbeitsgang fertig dekoriert und lackiert.

## Patentansprüche

1. Folie (10), aufweisend 50 bis 80 % Holzmehl und als Rest im wesentlichen ein Polyolefin.

2. Folie nach Anspruch 1, wobei das Polyolefin ein Polypropylen ist.

3. Folie nach Anspruch 1, wobei das Polyolefin ein Polyethylen ist.

4. Folie nach einem der vorhergehenden Ansprüche, **gekennzeichnet durch** eine Beschichtung mit einem Farbdekor (12).

5. Folie nach Anspruch 4, wobei über das Farbdekor (12) eine Lackschicht (14) aufgetragen ist.

6. Folie nach Anspruch 5, **dadurch gekennzeichnet, daß** die Lackschicht (14) UV-härtbar ist.

7. Folie nach einem der vorhergehenden Ansprüche, **gekennzeichnet durch** eine Stärke (S) im Bereich von 0,5 bis 5 mm.

8. Gegenstand aus Holz oder Holzwerkstoff, **gekennzeichnet durch** eine Beschichtung mit einer Folie gemäß einem der Ansprüche 1 bis 7.

9. Gegenstand aus Kunststoff **gekennzeichnet durch** eine Beschichtung mit einer Folie gemäß einem der Ansprüche 1 bis 7.

10. Verfahren zum Herstellen einer Folie, bei dem Polyolefin bei einer Temperatur von 150 bis 210°C mit 50 bis 80 % Holzmehl gemischt und als Folie extrudiert wird.

11. Verfahren nach Anspruch 10, **dadurch gekennzeichnet, daß** das Polyolefin ein Polypropylen oder ein Polyethylen ist.

12. Verfahren nach einem der Ansprüche 10 oder 11, **dadurch gekennzeichnet, daß** die Folie (10) bei einer Temperatur von 130 bis 150°C mit einem Farbdekor (12) beschichtet wird.

13. Verfahren nach Anspruch 12, **dadurch gekennzeichnet, daß** die Beschichtung im "Release"-Verfahren erfolgt.

14. Verfahren nach einem der Ansprüche 12 oder 13, **dadurch gekennzeichnet, daß** auf das Farbdekor (12) eine härtbare Lackschicht (14) aufgetragen und gehärtet wird, insbesondere UV-gehärtet.

15. Verfahren zum Aufbringen einer Folie (10) gemäß einem der Ansprüche 1 bis 7 auf einen Körper (30) aus Holz oder einem Holzwerkstoff, bei dem die Folie unter Erwärmung durch Druckdifferenz gegen den Körper gedrückt wird.

16. Verfahren nach Anspruch 15, wobei der Körper eine HolzSpanplatte ist.

17. Verfahren zum Herstellen eines Formteils, bei dem eine Folie gemäß einem der Ansprüche 1 bis 7 mit einem Kunststoff in einer Spritzgußmaschine hinterspritzt wird.

18. Verfahren nach Anspruch 17, wobei die Folie beim Hinterspritzen unter Zugspannung gehalten wird.
